# EUROPEAN PATENT SPECIFICATION

(11) **EP 1 686 822 B1**
(45) Date of publication and mention of the grant of the patent: **11.06.2008**
(21) Application number: 05290203.8
(22) Date of filing: 28.01.2005
(51) Int. Cl.: H04Q 7/38

(54) **Improved transmission of control messages on an uplink control channel of a wireless packet data network.**
Verbesserte Übertragung von Steuerungsnachrichten auf einem Aufwärtssteuerungskanal eines drahtlosen Packetdatennetzwerkes
Transmission ameliorée de messages de controle dans un canal de commande de liasion montante d'un réseau de données par paquets sans fil

(43) Date of publication of application: 02.08.2006
(73) Proprietor: MOTOROLA, INC., Schaumburg, IL 60196 (US)
(72) Inventor: Fiorillo, Amanda, 31000 Toulouse (FR); Bouvet, Cyril, Toulouse 31400 (FR); Parron, Jerome, Toulouse 31100 (FR)
(74) Representative: Cross, Rupert Edward Blount

(56) References cited:
- EP-A- 1 045 559
- US-A1- 2004 090 948
- US-B1- 6 532 225
- YI-CHIUN CHEN ET AL: "Simulation analysis of rlc for packet data simulation an services in umts systems" PERSONAL, INDOOR AND MOBILE RADIO COMMUNICATIONS, 2003. PIMRC 2003. 14TH IEEE PROCEEDINGS ON SEPT. 7-10, 2003, PISCATAWAY, NJ, USA,IEEE, vol. 1, 7 September 2003 (2003-09-07), pages 926-930, XP010681730 ISBN: 0-7803-7822-9

## Description

### Field of the Invention

The present invention relates to a method of communicating messages between a communication device and network, a communication device for use with a network, and a communication system. More particularly, the present invention relates to communicating control messages between a communication device and a network in response to a poll by the network during a downlink mode wherein data is sent from the network to the communication device over a download only link.

### Background of the Invention

Wireless communication systems, for example cellular telephone or private mobile radio communication systems, typically provide for radio communication links to be arranged between a network comprising a plurality of base stations (BSs) and a plurality of communication devices, often termed mobile stations (MSs). The MS may be a portable or mobile telephone, a Personal Digital Assistant (PDA), a wireless video or multimedia device, a portable computer, or the like.

Currently, the most ubiquitous cellular communication system is the 2nd generation communication system known as the Global System for Mobile communication (GSM). A number of enhancements and additions have been introduced to the GSM communication system with one such enhancement being the General Packet Radio System (GPRS).

GPRS is a system developed for enabling packet data based communication in a GSM communication system. Thus, the GPRS system is compatible with the GSM (voice) system and provides a number of additional services including provision of packet data communication, and also of packet based speech services. The GPRS system has been standardised as an add-on to an existing GSM communication system.

Another such enhancement to the GSM communication system is the Enhanced Data rates for GSM Evolution system, which is more commonly known as the EDGE system.

Communication systems such as those outlined above operate in accordance with internationally agreed standards. For example, the procedures used at the radio interface for the GPRS Medium Access Control/Radio Link Control (MAC/RLC) layer within a GSM/EDGE cellular communication system may be found in the European Telecommunications Standards Institute's (ETSI) GSM standard number 3GPP TS 04.60/44.060 V6.10.0 (2004-11).

The communication link from a base station to a mobile station is generally referred to as a downlink communication link or channel. Conversely, the communication link from a MS to a BS is generally referred to as an uplink communication link or channel.

During a down-link only data transfer, in other words for a downlink Temporary Block Flow (TBF), data is transmitted only from the network to a mobile station and uplink MAC/RLC control messages are sent by the mobile station to the network in response. Examples of uplink RLC/MAC control messages include a PACKET DOWNLINK ACK/NACK to acknowledge that data from the network has been correctly received and PACKET CELL CHANGE NOTIFICATION to notify that a message from the mobile station requesting a change in the serving cell for the mobile station is waiting to be transmitted.

During downlink only data transfer, the mobile station may have to transmit several uplink RLC/MAC control messages other than the PACKET DOWNLINK ACK/NACK. According to the 3GPP/ETSI TS 04.60/44.060 identified above and releases 4 and 5 of this specification, the mobile station is allowed to send a control message only when it is polled by the network. Thus, the speed of sending the uplink RLC/MAC control messages during a downlink only data transfer depends on the polling rate of the network. The specification further defines that the mobile station may transmit a RLC/MAC control message other than a PACKET DOWNLINK ACK/NACK control message at most every second time it is polled. In other words, the mobile station may only miss sending one PACKET DOWNLINK ACK/NACK only in order to send a different uplink RLC/MAC control message.

With new features introduced in the specifications identified above, many new uplink control messages have been created. For example, such additional uplink control messages include PACKET SI/PSI STATUS in which the mobile station asks for system information and settings of the serving cell and adjacent cells, PACKET CS REQUEST, and PACKET CELL CHANGE NOTIFICATION. Thus, the situation can arise when the mobile station is required to transmit several uplink control messages at the same time.

Since the uplink control messages may only be sent in response to a poll from the network, a bottleneck of uplink control messages may build at the mobile station. This will be a particular problem with a network configuration having a low polling rate. Consequently, the expected performance of the new features associated with the uplink control messages may be reduced.

In release 6 of the 3GPP/ETSI TS 04.60/44.060 specification, priority has been associated to each uplink control message to avoid performance degradation for some features. But there are still some uplink control messages with the same priority so that some conflicts may still occur. In other words, even with assigning different priorities to the different uplink control messages, the situation may arise when several uplink control messages are waiting to be sent by the mobile station at a given time. Moreover, handling prioritised control messages introduces code complexity which will increase each time a new uplink control message is created when new features are added to the future releases of the specification.

Furthermore, sending uplink control messages is still dependent on the network polling rate. Thus, bottlenecks of control messages waiting to be sent to the network may still occur, particularly for a network with a low polling rate e.g. a poll sent every 200ms. This causes a delay in the sending of the uplink control messages which may affect performance of the new features. With future releases, it is anticipated that more uplink control messages will be created which will make the above stated problems worse.

There is therefore a need for an improved method of communicating messages between a communication device and a network wherein the above mentioned problems are overcome or at least alleviated.

Document US 2004/0090948 discloses a GPRS system comprising a plurality of mobile terminals which send channel requests to the network and receive control blocks in return, containing a number of fields including an uplink state flag field containing sending permissions.

### Summary of the invention

In accordance with a first aspect of the present invention there is provided a method of communicating messages between a communication device and a network as recited in claim 1 of the accompanying claims.

In accordance with a second aspect of the present invention there is provided a communication device as recited in claim 8 of the accompanying claims.

In accordance with a third aspect of the present invention there is provided a communication system as recited in claim 13 of the accompanying claims.

In accordance with a fourth aspect of the present invention there is provided a method of communication between a network and a communication device as recited in claim 14 of the accompanying claims.

### Brief Description of the Drawings

A method of communicating messages between a communication device and a network, a communication device, and a communication system, will now be described, by way of example only, with reference to the accompanying drawings in which:
FIG. 1 is a schematic diagram of part of a wireless communications system.
FIG. 2 shows an exemplary situation in which the present invention may be applied.
FIG. 3 shows a block schematic diagram of a communications device.
FIG. 4 shows a schematic diagram of part of the contents of a PACCH control message buffer of FIG. 3.
FIG. 5 shows a representation of a PACCH control message according to the prior art.
FIG. 6 shows a representation of a PACCH control message according to one embodiment of the present invention.
FIG. 7 shows a comparison between the message sequence chart without the invention put into practice and the message sequence chart for when the invention is put into practice.

### Detailed description of the specific embodiment

The invention will now be described with reference to the accompanying drawings in which the same or similar parts have been given the same reference numerals. Although described with reference to the Global System for Mobile communications (GSM)/General Packet Radio Service (GPRS)/Enhanced Data rates for Global Evolution (EDGE) systems, the use of the described method for speeding-up uplink control messages is applicable to any poll based communications system.

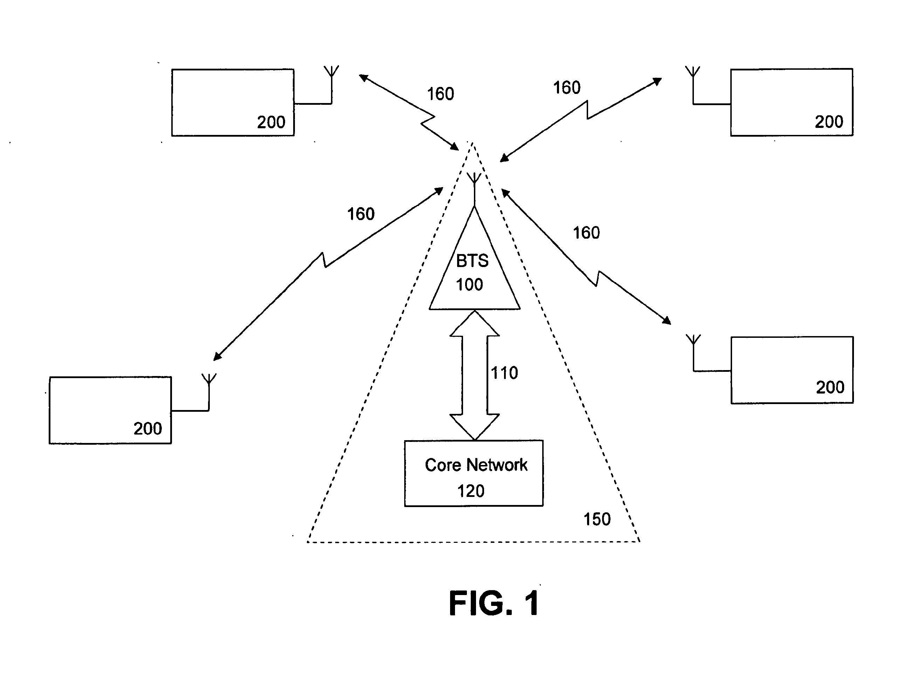

FIG. 1 shows a small portion of a typical wireless communications system, including a base station (BTS) 100, connected to the core network (CN) 120, via a bi-directional wired or wireless communications link 110. Only one base station 100 is shown in FIG. 1. It will be appreciated that real-life wireless communications systems incorporate a number of base stations 100, each covering an area called a cell, and connected to the core network 120 via wired or wireless links 110, depending on local topology. FIG. 1 also includes a number of communication devices 200, each in communication with the base station 100 via wireless links 160. In the foregoing description, the base stations 100 and core network 120 components shall be referenced together as the network 150, with each communication device 200 considered separate to the network.

Such wireless networks are well known in the art, and therefore the specifics of how such systems operate will not be described in detail, apart from where appropriate for the understanding of the invention as described herein.

The sort of wireless network shown in FIG. 1 and described above, are capable of carrying both voice (calls) and data. Typically, the data is overlaid above, using packet switching technology, the voice calls, which make use of switched circuit technology. An example of the packet carrying portion of such a wireless network is the GSM/EDGE Radio Access Network (GERAN).

Since the described embodiment is cast in terms of data only transmission within the GERAN, a description of the voice carrying portion of the network will be omitted. However, the data may include video data, packet based voice data, short message service (SMS) data or the like.

The communication links used within the GERAN wireless network are typically either control links or traffic links. Both types of link may be either uni-directional, e.g. an uplink only carrying data from the communication device 200 to the network 150 or a downlink only carrying data from the network 150 to the communication device 200, else they can be bi-directional, capable of carrying data in both directions between the communication device 200 and the network 150. Communication links may also be either shared, i.e. shared amongst a number of different communication devices 200, else they can be dedicated to use only by a particular communication device 200.

The control links carry the control messages sent and received by both the network 150 and the communication devices 200 to/from each other, which control the way in which the wireless resources are used. For example, they can be used to setup or tear down traffic links, or further control links. They can also be used to carry the signalling necessary for the correct operation of the network and communication devices 200, taken as a whole.

The traffic links carry the actual data that needs to be sent and received. This data can be in the form of speech data, digitally encoded as is well known in the art, for example using Adaptive Multi Rate (AMR) coding. This data can also be user data, for example derived from multimedia messages (MMS), or derived from a communication device 200 accessing a data network, such as the internet, using the GERAN digital wireless network.

The communication links used within the GERAN wireless network are carried over logical channels, which are, in turn, carried over physical channels, as is well known in the art.

There are many different types of links involved in the overall operation of such GERAN wireless networks, however, for clarity, only the links relevant to the invention shall be described herein.

The Packet Data Traffic Channel (PDTCH) is a logical uni-directional traffic channel that carries user data to or from the network 150 using, for example, Gaussian Minimum Shift Keying (GMSK) or 8-Phase Shift Keying (8-PSK). The PDTCH can be carried over either a Shared Basic Physical SubCHannel (SBPSCH) or a Dedicated Basic Physical SubCHannel (DBPSCH). Such PDTCHs can be either full or half rate. The full or half rate refers to the number of bursts within each time slot available for use in sending data.

The Packet Associated Control Channel (PACCH) is a bi-directional logical control channel, associated with a bi-directional Temporary Block Flow (TBF). This PACCH is shared by the network 150, and a number of communication devices 200, and as such, requires a controlled access method to ensure the correct communication device 200 is accessing the shared channel at that specific time.

Access to the PACCH by a communication device 200 is controlled by the network using polling. This is to say, a particular communication device 200 can only send a control message to the network 150 using the PACCH when it receives a valid poll message from the network 150 that is addressed to that communication device 200.

TBFs are physical or logical connections made between the communications devices 200 and the network 150. They can be either uni-directional or bi-directional. Uni-directional TBFs are used for uni-directional traffic or control channels, whilst bi-directional TBFs are used, as above, for bi-directional traffic or control channels.

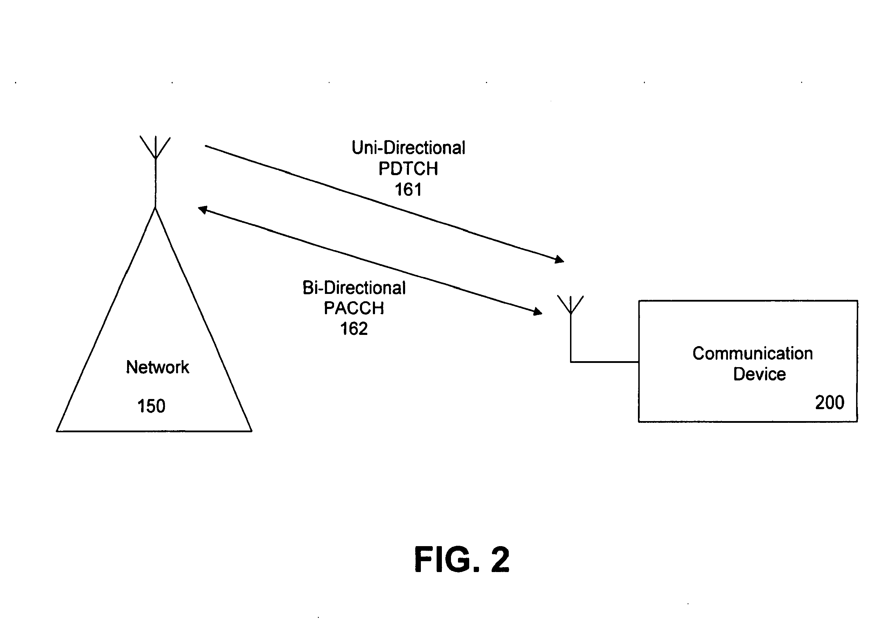

FIG. 2 shows the communication links between a communication device 200 and the network 150 whilst the network operates in a downlink mode wherein data is sent from the network 150 to the communication device 200, over a download only link, for example the uni-directional PDTCH 161. A bi-directional PACCH 162 between the network 150 and communication device 200 is also established. The uni-directional downlink PDTCH 161 is being used to receive data at the communication device from the network 150, for example an MMS message. The bi-directional PACCH 162 is being used to send uplink control messages from the communication device 200 back up to the network 150.

The uplink control messages can be any one of a number of different types of uplink control messages. These include PACKET DOWNLINK ACK/NACK messages containing a Final Ack Indicator (FAI), PACKET CS REQUEST, PACKET CELL CHANGE NOTIFICATION, PACKET DOWNLINK ACK/NACK messages containing a Channel Request Description IE (CRDIE), and PACKET DOWNLINK ACK/NACK messages containing neither FAI nor CRDIE.

Further uplink control messages, that are yet to be devised, may also be used in the present invention without departing from the scope of the invention. In fact, it is the inherent likelihood of further uplink control messages being devised that is part of the problem that the invention seeks to solve, namely that of uplink control message bottle necks.

Uplink control messages may also have sending priorities assigned to them, and the above list of possible uplink control messages is written taking into account the current priority level of each message in relation to the others in the list. As defined in Release 6 of the 3GPP/ETSI TS 04.60/44.060 specification.

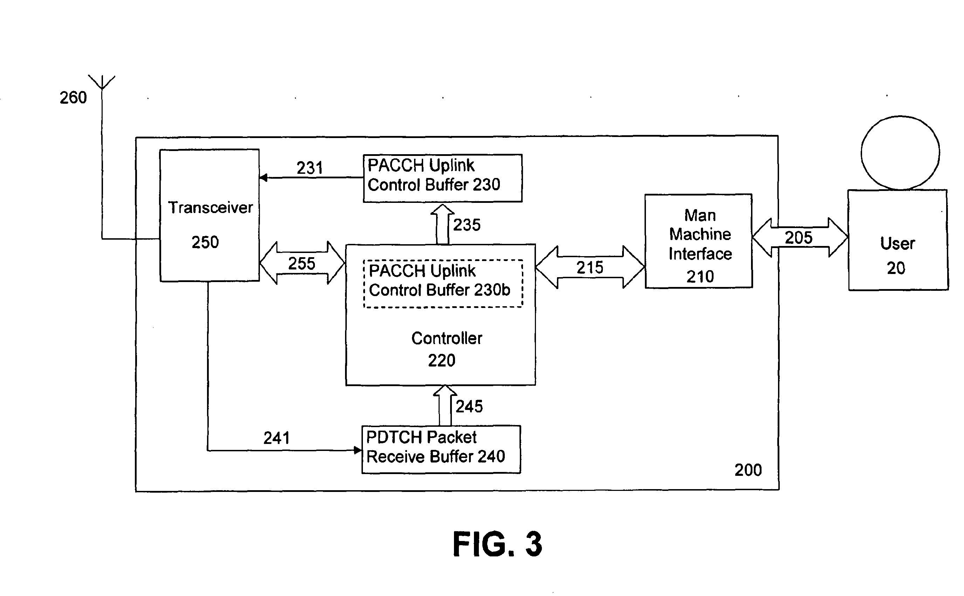

FIG. 3 shows a portion of a communications device 200. The portion shown relates to exemplary hardware used to receive data from the network 150, via the uni-directional downlink PDTCH 161, and to send uplink control messages from the communication device 200 to the network 150 over the bi-directional PACCH 162.

This exemplary hardware comprises a man machine interface 210, in communication with a controller 220 over interface 215. The man machine interface 210 may include such devices as a screen, for displaying information 205 to the user 20, a keypad, for the user 20 to input data 205 to the communication device 200, and the like, as is well known in the art.

The controller 220 may be a dedicated hardware controller, else it may also be formed from software running on a suitable general purpose processor, such as an ARM-7 processor.

The controller 220 is in communication with a PACCH uplink control buffer 230 and a PDTCH packet receive buffer 240, via uni-directional interfaces 235 and 245 respectively. The PACCH uplink control buffer 230 is used for storing uplink control messages that are to be sent to the network 150. The PDTCH packet receive buffer 240 is used for storing incoming data packets as they are received from the network 150.

If the controller 220 is a dedicated hardware controller, each of the above described buffers may be part of the controller 220. Equally, these buffers may be discrete memory external to the controller 220. An example of an internal PACCH Uplink buffer 230b is shown in dotted lines in FIG. 3.

The controller 220 is also in communication with a transceiver 250 over bi-directional interface 255. In other, equally valid embodiments of the invention, the transceiver may be replaced by discrete transmitter and receiver components instead, as is known in the art. The transceiver 250 is connected to an antenna 260, to facilitate physical transmission over wireless link 160.

Both the PACCH uplink buffer 230, and the PDTCH packet receive buffer 240 are also connected to the transceiver 250, via uni-directional interfaces 231 and 241 respectively. Alternatively, these buffers may access the transceiver via the controller 220, as is well known in the art. In this case, the uni-directional interfaces 235 and 245 would instead be bi-directional interfaces (not shown in FIG. 3) and interfaces 231 and 241 would be omitted.

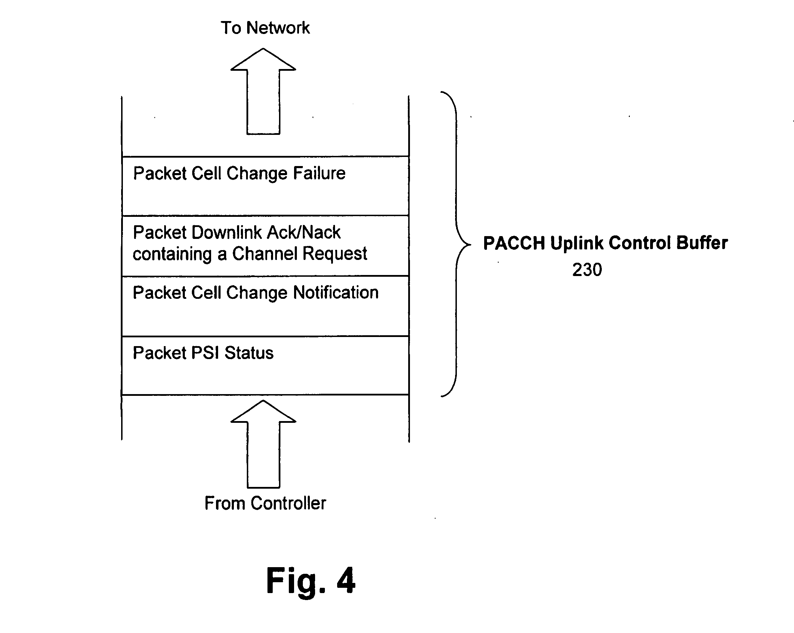

FIG. 4 shows an example of part of the PACCH Uplink control buffer 230, in the case where there are multiple uplink control messages waiting to be sent from the communication device 200 over the PACCH link 162 to the network 150. Of course, the location of a particular uplink control message within the respective Uplink control buffer 230 will be dependent upon its assigned priority.

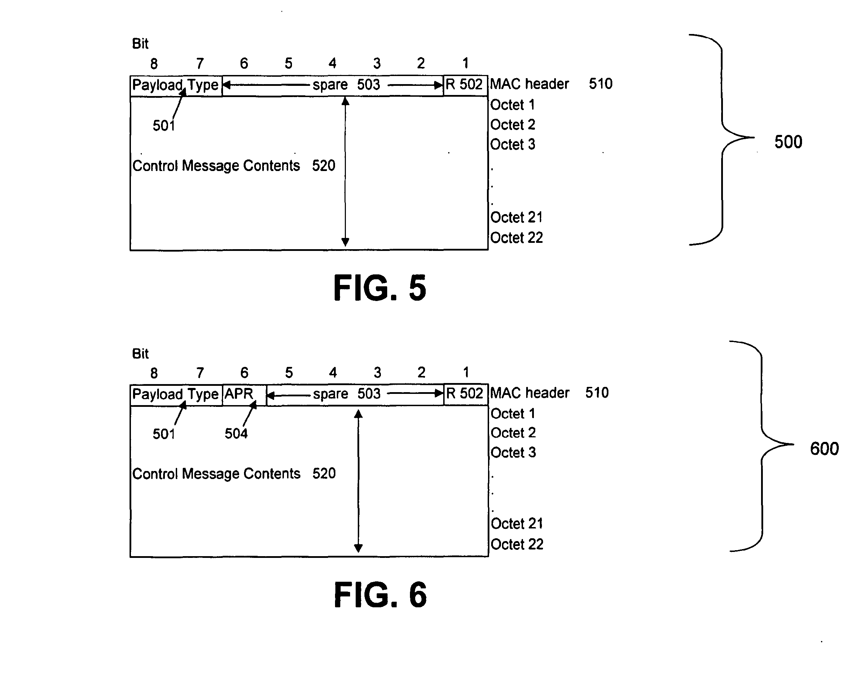

FIG. 5 shows a standard PACCH uplink control message 500, for example an ACK/NACK uplink control message, according to the prior art. Each uplink control message 500 includes a MAC header 510, and the main body of the message, i.e. its contents, 520.

The MAC header 510 contains information regarding the payload type 501, whether the control message is a resent message (or not) 502, and a number of spare bits 503, as yet unallocated within the GSM/GPRS/EDGE specifications.

According to one of the aspect of the invention, one of these currently unallocated bits 503 within the MAC header 510 can be used as a resource request, to indicate to the network 150 that the communication device 200 sending the uplink control message 500 still has further uplink control messages 500 to send, and therefore requires additional polling by the network 150.

FIG. 6 shows an uplink control message 600 according to an embodiment of the present invention, where one 504 of the spare bits within the MAC header 510 is now being used as a resource request to indicate to the network 150 that an additional poll message is required by the communication device 200 sending the uplink control message 600. In this embodiment, the particular bit being used, for example the sixth bit, indicates that additional polling is required by the communication device 200 when it is set to logic "1", and that the communication device has no further polling requirements when it is set to logic "0".

This new control bit can be called, for example, the Additional Polling Request (APR) bit 504.

Of course, the particular name given to this new control bit 504 within the MAC header 510 may be any other suitable nomenclature. Equally, this APR control bit 504 may be located at any spare bit 503 within the MAC header 510. However, once set, the location of the APR control bit 504 within the MAC header 510 should preferably remain in the same location. This is to ensure that all communication devices 200 and networks 150, according to the present invention may operate interchangeably.

Whilst the present invention has been described in terms of only using a single bit to notify to the network 150 that additional polling is required, it is also within the scope of this invention to use a combination of more than one of the spare bits 503 within the MAC header 510. For example, multiple bits of the header can be used to indicate the number of polled control messages that the mobile subscriber needs to send. However, in the preferred embodiment, only one bit is used, for efficiency.

Whenever the network 150 receives an uplink control message 600 from a communication device 200, it decodes the MAC header as per usual, but also including the additional step of checking the APR bit 504. Whenever it is determined by the network 150 that an additional poll is required by a particular communication device 200, the network allocates another poll to that communication device 200.

Where there are no additional polling resources available at that time, the network 150 may not send an additional poll until such time that the polling resources become available. Specifics of how the network 150 may allocate additional poll requests is dependent upon the way in which the network 150 is configured, and does not impact on the way on which the additional poll request is made.

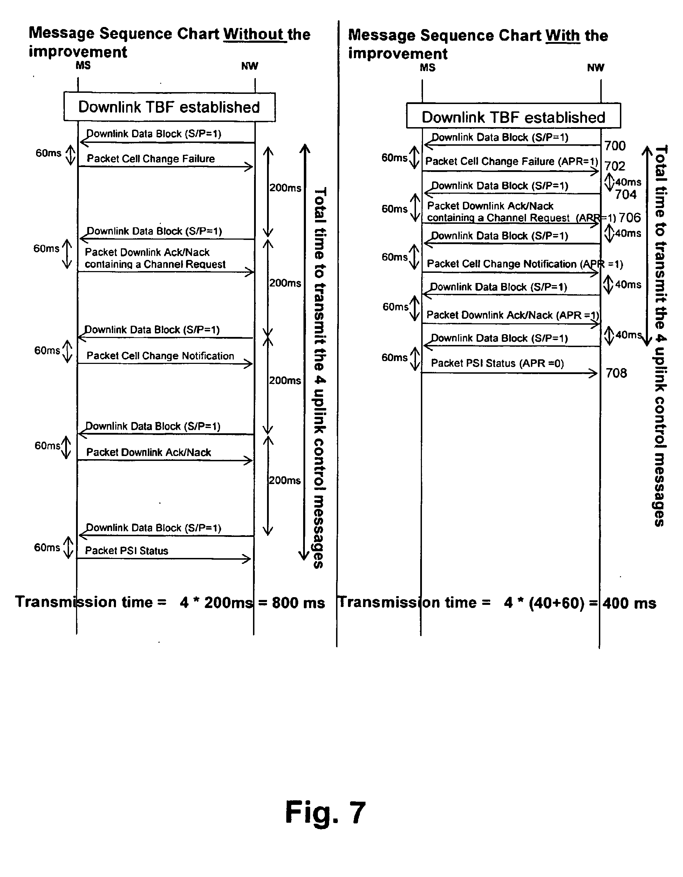

FIG. 7 shows a comparison between the message sequencing when standard polling is used, i.e. the prior art situation, versus the message sequencing in accordance with the present invention. In this example, it is assumed that the PACCH uplink control buffer 230 has four uplink control messages to send, as shown in FIG. 4.

In a typical prior art situation, the network 150 may poll communication devices 200 every 200 ms. When polled, the communication device 200 must respond to the poll with an uplink control message 500 sent in the Absolute Frame Number (AFN) specified by the network 150 within the Relative Reserved Block Period (RRBP) field, as is known in the art, and specified in the 3GPP/ETSI specification document. The earliest response AFN that can be specified by the network 150 is typically 13 AFNs after the poll has been received by the communication device 200, i.e. current AFN + 13, which, given the length of an AFN period is specified as being 4.615ms, approximately equals 60 ms. However, this is only the earliest available response AFN, and therefore a later response AFN may be specified by the network 150 instead, if required.

Even though the communication device 200 has more uplink messages to send, once it has responded to the poll, according to the 3GPP/ETSI specification, it may not send any further uplink control messages on the shared PACCH link 162 until the next poll is received from the network 150, approximately 200ms after the last poll was received.

When the next poll message is received, the communication device 200 sends the next uplink control message requiring sending to the network 150. This carries on until all uplink messages have been sent. In the example shown, with four uplink control messages, the time taken to finish is approximately 800ms.

A method of communicating messages in accordance with the preferred embodiment of the present invention and applying the typical situation outlined above of having four uplink control messages to send, will now be briefly described. The time taken by a communication device 200 to respond to a poll by the network will not change.

The network 150 first sets up a download only link over a uni-directional PDTCH 161, and transmits a downlink data block, step 700. In response, the communication device 200 transmits an uplink control message 600, in the given example this is a Packet Cell Change Failure control message, within approximately 60 ms after the poll has been received by the communication device 200, step 702. A resource request, which in the preferred embodiment is the APR bit 504 of the uplink control message 600, is transmitted by the communication device 200 to the network 150 as part of the uplink control message 600. The resource request is a request by the communication device 200 for additional resource from the network 150, in order to transmit a second uplink control message. In the preferred embodiment, the additional resource is an additional poll from the network 150.

When the network 150 decodes the MAC header 510 of the Packet Cell Change Failure control message, and detects that the allocated APR bit 504 is set to logic "1", the network 150 detects that an additional poll is required. Accordingly, the network 150 then sends out this additional poll, by way of a downlink data block step 704.

When this additional poll is received at the communication device 200, it sends the next uplink control message in the PACCH uplink control buffer 230 to the network 150 as soon as it can, together with the APR bit 504 set to "1" again to indicate to the network 150 that a still further message poll is required, step 706.

This process repeats until the communication device 200 has no further uplink control messages to send to the network in the PACCH uplink control buffer 230. In this situation, the APR bit of the last uplink control message, in the given example a Packet PSI Status control message, is set to logic "0" to indicate to the network 150, that this communication device 200 has no further need for additional polls, step 708.

When using this method of indicating additional poll messages are required, the time taken by the network 150 to send another poll to the communication device 200 can be reduced to approximately 40 ms. This equates to approximately 20 ms for the request to be processed by the network 150, and a further 20 ms for the communication device 200 to receive another poll message from the network 150.

As shown in FIG. 7, the total time to send all four messages is reduced by approximately half, to 400ms. Of course, the specific time savings achieved will vary depending upon the polling rate of the network and how much resource a network can allocate to a communication device at a given time. The latter being dependent on such things as the number of users 20 on the network 150, and how those users 20 are making use of the network (e.g. how they are moving about, and therefore causing cell handovers, the amount of data they are each sending, etc).

In summary, the present invention provides a method of communicating messages between a communication device and a network operating in a downlink mode, wherein the communication device may request additional resource (i.e. additional polls) from the network when the communication device has additional control messages to be sent to the network.

By allowing for the communication device to request additional resource from the network (e.g. additional polls from the network) when the communication device has additional control messages to be sent, the present invention provides for an increase in the frequency at which the communication device is polled, which increases the speed at which the additional messages are transmitted.

The present invention therefore reduces the chances of bottlenecks of control messages occurring at the communication device and hence reduces the degradation of performance of the features associated with the control messages.

It will be further appreciated that as new control messages are created for new features, with the result that the occurrence of bottlenecks will be even more likely, the present invention's ability to speed up the transmission of control messages will be particularly advantageous.

## Claims

1. A method of communicating messages between a communication device (200) and a network (150) operating in a downlink mode wherein data is sent from the network (150) to the communication device (200) over a download only link and the communication device (200) communicates with the network (150) over a control link when polled by the network (150), the communication device (200) having at least two messages for transmission to the network (150), the method comprising the step of:
transmitting by the communication device (200) to the network (150) a first message in response to a first poll message from the network (150) **characterised in that** the method further comprises the steps of:;
transmitting by the communication device (200) to the network (150) a resource request in response to the first poll message for requesting additional resource for transmitting a second message to the network (150); and
receiving by the communication device (200) from the network (150) an additional poll message in response to transmitting a resource request from the communication device (200).

2. The method of claim 1, wherein the step of transmitting a resource request comprises transmitting the resource request together with the first message (600).

3. The method of claim 1 or 2, wherein messages from the communication device (200) to the network (150) each comprise a header (510) and the resource request comprises at least one bit (504) of the header (510) of the first message (600).

4. The method of claim 3, wherein a value of 1 assigned to the at least one bit (504) of the header, indicates to the network (150) that additional resource is required by the communication device (200).

5. The method of any preceding claim, further comprising:
transmitting by the communication device (200) to the network (150) the second message (600) in response to the additional poll message.

6. The method of any preceding claim, wherein the messages (600) from the communication device (200) to the network (150) are control messages.

7. The method of claim 3, wherein the second and subsequent messages from the communication device (200) to the network (150) also include a resource request comprising at least one bit of the header (510) of each message.

8. A communication device (200) for use with a network (150) operating in a downlink mode wherein data is sent from the network (150) to the communication device (200) over a download only link and the communication device (200) communicates with the network (150) over a control link when polled by the network (150), the communication device (200) having at least two messages for transmission to the network (150), and the communications device (200) comprising:
a receiver, for receiving a poll message from the network (150); and
a transmitter, for transmitting a message to the network (150) in response to a poll message;
**characterised in that** the communication device further comprises:
means for generating (220) a resource request in response to the poll message for transmission to the network (150) for requesting additional resource for transmitting a second message to the network (150), wherein the additional resource is an additional poll message.

9. The communication device (200) of claim 8 , wherein the means for generating (220) a resource request is arranged to generate the resource request as part of the first message.

10. The communication device of claim 8 or 9, wherein the means for generating (220) a resource request includes means for assigning a predetermined value to the at least one bit of a header (510) in the first message to indicate to the network (150) that additional resource is required by the communication device (200).

11. The communication device (200) of any of claims 8 to 10, wherein the messages sent from the communication device (200) to the network (150) are control messages.

12. The communication device (200) of any of claims 8 to 11, wherein the communication device (200) forms part of a wireless communication system.

13. A communication system comprising:
a network (150); and
a communication device (200) as claimed in any one of claims 8 to 12.

14. A method of communicating messages between a network (150) and a communication device (200), the network (150) operating in a downlink mode wherein data is sent from the network (150) to the communication device (200) over a download only link and the communication device (200) communicates with the network (150) over a control link when polled by the network (150), the communication device (200) having at least two messages for transmission to the network (150), the method comprising the steps of:
transmitting by the network (150) to the communication device (200) a poll message; and
receiving by the network (150) a first message transmitted by the communication device (200) in response to a poll message from the network (150);
**characterised in that** the method further comprises the steps of:
receiving by the network (150) a resource request transmitted by the communication device (200) in response to the first poll message for requesting additional resource for transmitting a second message to the network (150); and
transmitting by the network (150) to the communication device (200) in response to receiving the resource request from the communication device (200) an additional poll message.

15. The method of claim 1,or 14, wherein the communication device (200) and network (150) form part of a wireless communication system.

## Patentansprüche

1. Verfahren zur Weiterleitung von Nachrichten zwischen einer Kommunikationsvorrichtung (200) und einem Netzwerk (150), das in einem Abwärtsverbindungs- bzw. Downlinkmodus arbeitet, wobei Daten von dem Netzwerk (150) über eine Nur-Download-Verbindung an die Kommunikationsvorrichtung (200) gesendet werden, und wobei die Kommunikationsvorrichtung (200) über eine Steuerungsverbindung mit dem Netzwerk (150) kommuniziert, wenn diese von dem Netzwerk (150) abgefragt wird, wobei die Kommunikationsvorrichtung (200) mindestens zwei Nachrichten zur Übertragung an das Netzwerk (150) aufweist, wobei das Verfahren die folgenden Schritte umfasst:
Übertragung, durch die Kommunikationsvorrichtung (200), einer ersten Nachricht an das Netzwerk (150), ansprechend auf eine erste Abfragenachricht von dem Netzwerk (150), **dadurch gekennzeichnet, dass** das Verfahren des Weiteren die folgenden Schritte umfasst:
Übertragung, durch die Kommunikationsvorrichtung (200), einer Ressourcenanforderung an das Netzwerk (150), ansprechend auf die erste Abfragenachricht, zur Anforderung weiterer Ressourcen zur Übertragung einer zweiten Nachricht an das Netzwerk (150); und
Empfang, durch die Kommunikationsvorrichtung (200), einer zusätzlichen Abfragenachricht vom Netzwerk (150), ansprechend auf die Übertragung einer Ressourcenanforderung von der Kommunikationsvorrichtung (200).

2. Verfahren nach Anspruch 1, **dadurch gekennzeichnet, dass** der Schritt der Übertragung einer Ressourcenanforderung die Übertragung der Ressourcenanforderung zusammen mit der ersten Nachricht (600) umfasst.

3. Verfahren nach einem der Ansprüche 1 oder 2, **dadurch gekennzeichnet, dass** Nachrichten von der Kommunikationsvorrichtung (200) an das Netzwerk (150) jeweils einen Dateikopf (510) aufweisen und dass die Ressourcenanforderung mindestens ein Bit (504) des Dateikopfes (510) der ersten Nachricht (600) aufweist.

4. Verfahren nach Anspruch 3, **dadurch gekennzeichnet, dass** ein Wert von 1, der dem mindestens einen Bit (504) des Dateikopfes zugewiesen ist, dem Netzwerk (150) anzeigt, dass zusätzliche Ressourcen von der Kommunikationsvorrichtung (200) benötigt werden.

5. Verfahren nach einem der vorhergehenden Ansprüche, welches des Weiteren Folgendes umfasst:
Übertragung, durch die Kommunikationsvorrichtung (200), der zweiten Nachricht (600) an das Netzwerk (150), ansprechend auf die zusätzliche Abfragenachricht.

6. Verfahren nach einem der vorhergehenden Ansprüche, **dadurch gekennzeichnet, dass** es sich bei den Nachrichten (600) von der Kommunikationsvorrichtung (200) an das Netzwerk (150) um Steuerungsnachrichten handelt.

7. Verfahren nach Anspruch 3, **dadurch gekennzeichnet, dass** die zweite Nachricht und die nachfolgenden Nachrichten von der Kommunikationsvorrichtung (200) an das Netzwerk (150) auch eine Ressourcenanforderung umfassen, die mindestens ein Bit des Dateikopfes (510) von jeder Nachricht aufweist.

8. Kommunikationsvorrichtung (200) zur Verwendung mit einem Netzwerk (150), das in einem Abwärtsverbindungs- bzw. Downlinkmodus arbeitet, wobei Daten von dem Netzwerk (150) über eine Nur-Download-Verbindung an die Kommunikationsvorrichtung (200) gesendet werden, und wobei die Kommunikationsvorrichtung (200) über eine Steuerungsverbindung mit dem Netzwerk (150) kommuniziert, wenn sie von dem Netzwerk (150) abgefragt wird, wobei die Kommunikationsvorrichtung (200) mindestens zwei Nachrichten zur Übertragung an das Netzwerk (150) aufweist, und wobei die Kommunikationsvorrichtung (200) Folgendes aufweist:
einen Empfänger zum Empfangen einer Abfragenachricht von dem Netzwerk (150); und
einen Sender zum Übertragen einer Nachricht an das Netzwerk (150), ansprechend auf eine Abfragenachricht,
**dadurch gekennzeichnet, dass** die Kommunikationsvorrichtung des Weiteren Folgendes aufweist:
Mittel zum Erzeugen (220) einer Ressourcenanforderung ansprechend auf die Abfragenachricht zur Übertragung an das Netzwerk (150) zur Anforderung zusätzlicher Ressourcen zur Übertragung einer zweiten Nachricht an das Netzwerk (150), wobei die zusätzliche Ressource eine zusätzliche Abfragenachricht ist.

9. Kommunikationsvorrichtung (200) nach Anspruch 8, **dadurch gekennzeichnet, dass** das Mittel zur Erzeugung (220) einer Ressourcenanforderung so angeordnet ist, dass die Ressourcenanforderung als Teil der ersten Nachricht erzeugt wird.

10. Kommunikationsvorrichtung nach einem der Ansprüche 8 oder 9, **dadurch gekennzeichnet, dass** das Mittel zur Erzeugung (220) einer Ressourcenanforderung Mittel zum Zuweisen eines vorher festgelegten Wertes zu dem mindestens einen Bit eines Dateikopfes (510) in der ersten Nachricht umfasst, um dem Netzwerk (150) anzuzeigen, dass zusätzliche Ressourcen von der Kommunikationsvorrichtung (200) benötigt werden.

11. Kommunikationsvorrichtung (200) nach einem der Ansprüche 8 bis 10, **dadurch gekennzeichnet, dass** die von der Kommunikationsvorrichtung (200) an das Netzwerk (150) gesendeten Nachrichten Steuerungsnachrichten sind.

12. Kommunikationsvorrichtung (200) nach einem der Ansprüche 8 bis 11, **dadurch gekennzeichnet, dass** die Kommunikationsvorrichtung (200) einen Teil eines drahtlosen Kommunikationssystems bildet.

13. Kommunikationssystem, welches Folgendes aufweist:
ein Netzwerk (150); und
eine Kommunikationsvorrichtung (200) nach einem der Ansprüche 8 bis 12.

14. Verfahren zur Übertragung von Nachrichten zwischen einem Netzwerk (150) und einer Kommunikationsvorrichtung (200), wobei das Netzwerk (150) in einem Abwärtsverbindungs- bzw. DownlinkModus arbeitet, wobei Daten von dem Netzwerk (150) über eine Nur-Download-Verbindung an die Kommunikationsvorrichtung (200) gesendet werden, und wobei die Kommunikationsvorrichtung (200) über eine Steuerungsverbindung mit dem Netzwerk (150) kommuniziert, wenn diese von dem Netzwerk (150) abgefragt wird, wobei die Kommunikationsvorrichtung (200) mindestens zwei Nachrichten zur Übertragung an das Netzwerk (150) aufweist, wobei das Verfahren die folgenden Schritte umfasst:
Übertragen, durch das Netzwerk (150), einer Abfragenachricht an die Kommunikationsvorrichtung (200); und
Empfangen, durch das Netzwerk (150), einer ersten Nachricht, die von der Kommunikationsvorrichtung (200), ansprechend auf eine Abfragenachricht von dem Netzwerk (150), gesendet wird;
**dadurch gekennzeichnet, dass** das Verfahren des Weiteren die folgenden Schritte umfasst:
Empfangen, durch das Netzwerk (150), einer Ressourcenanforderung, die von der Kommunikationsvorrichtung (200) ansprechend auf eine erste Abfragenachricht übertragen wird, um zusätzliche Ressourcen zur Übertragung einer zweiten Nachricht an das Netzwerk (150) anzufordern; und
Übertragen, durch das Netzwerk (150), einer zusätzlichen Abfragenachricht an die Kommunikationsvorrichtung (200), ansprechend auf die Ressourcenanforderung von der Kommunikationsvorrichtung (200).

15. Verfahren nach einem der Ansprüche 1 oder 14, **dadurch gekennzeichnet, dass** die Kommunikationsvorrichtung (200) und das Netzwerk (150) Teile eines drahtlosen Kommunikationssystems bilden.

## Revendications

1. Procédé de communication de messages entre un dispositif de communication (200) et un réseau (150) fonctionnant en mode de liaison descendante où des données sont transmises du réseau (150) au dispositif de communication (200) par une liaison de téléchargement seulement, et le dispositif de communication (200) communique avec le réseau (150) par une liaison de commande lorsqu'il est dirigé par le réseau (150), le dispositif de communication (200) ayant au moins deux messages pour la transmission au réseau (150), le procédé comprenant l'étape consistant à:
transmettre par le dispositif de communication (200) au réseau (150) un premier message en réponse à un premier message poll du réseau (150), **caractérisé en ce que** le procédé comprend en outre les étapes consistant à:
transmettre par le dispositif de communication (200) au réseau (150) une requête de ressource en réponse au premier message poll pour demander une ressource additionnelle pour la transmission d'un second message au réseau (150); et
recevoir par le dispositif de communication (200) du réseau (150) un message poll additionnel en réponse à la transmission d'une requête de ressource du dispositif de communication (200).

2. Procédé selon la revendication 1, où l'étape de transmission d'une demande de ressource comprend la transmission de la demande de ressource ensemble avec le premier message (600).

3. Procédé selon la revendication 1 ou 2, où les messages du dispositif de communication (200) au réseau (150) comprennent chacune un en-tête (510), et la requête de ressource comprend au moins un binaire (504) de l'en-tête (510) du premier message (600).

4. Procédé selon la revendication 3, où une valeur de 1 attribuée à au moins un binaire (504) de l'en-tête, indique au réseau (150) qu'une ressource additionnelle est requise par le dispositif de communication (200).

5. Procédé selon l'une des revendications précédentes, comprenant en outre la transmission par le dispositif de communication (200) au réseau (150) du second message (600) en réponse au message poll additionnel.

6. Procédé selon l'une des revendications précédentes, où les messages (600) du dispositif de communication (200) au réseau (150) sont des messages de commande.

7. Procédé selon la revendication 3, où le deuxième message et les messages suivants du dispositif de communication (200) au réseau (150) comprennent également une requête de ressource comprenant au moins un binaire de l'en-tête (510) de chaque message.

8. Dispositif de communication (200) pour utilisation avec un réseau (150) fonctionnant en un mode de liaison descendante, où des données sont transmises du réseau (150) au dispositif de communication (200) par une liaison de téléchargement seulement, et le dispositif de communication (200) communique avec le réseau (150) par une liaison de commande lorsqu'il est dirigé par le réseau (150), le dispositif de communication (200) ayant au moins deux messages pour la transmission au réseau (150), et le dispositif de communication (200) comprenant:
un récepteur, pour recevoir un message poll du réseau (150); et
un transmetteur, pour transmettre un message au réseau (150) en réponse à un message poll;
**caractérisé en ce que** le dispositif de communication comprend en outre:
des moyens pour produire (220) une requête de ressource en réponse au message poll pour la transmission au réseau (150) pour demander une ressource additionnelle pour la transmission d'un deuxième message au réseau (150), où la ressource additionnelle est un message poll additionnel.

9. Dispositif de communication (200) selon la revendication 8, où les moyens pour produire (220) une requête de ressource sont agencés pour produire la requête de ressource en tant que partie du premier message.

10. Dispositif de communication selon la revendication 8 ou 9, où les moyens pour produire (220) une requête de ressource comprennent des moyens pour attribuer une valeur prédéterminée à au moins un binaire d'un en-tête (510) dans le premier message pour indiquer au réseau (150) qu'une ressource additionnelle est requise par le dispositif de communication (200).

11. Dispositif de communication (200) selon l'une des revendications 8 à 10, où les messages transmis du dispositif de communication (200) au réseau (150) sont des messages de commande.

12. Dispositif de communication (200) selon l'une des revendications 8 à 11, où le dispositif de communication (200) fait partie d'un système de communication sans fil.

13. Système de communication comprenant:
un réseau (150); et
un dispositif de communication (200) selon l'une des revendications 8 à 12.

14. Procédé pour communiquer des messages entre un réseau (150) et un dispositif de communication (200), le réseau (150) fonctionnant en mode de liaison descendante où des données sont transmis du réseau (150) au dispositif de communication (200) par une liaison à téléchargement seulement, et le dispositif de communication (200) communique avec le réseau (150) par une liaison de commande lorsqu'il est dirigé par le réseau (150), le dispositif de communication (200) ayant au moins deux messages pour la transmission au réseau (150), le procédé comprenant les étapes consistant à::
transmettre par le réseau (150) au dispositif de communication (200) un message poll; et
recevoir par le réseau (150) un premier message transmis par le dispositif de communication (200) en réponse à un message poll du réseau (150);
**caractérisé en ce que** le procédé comprend en outre les étapes consistant à:
recevoir par le réseau (150) une demande de ressource transmise par le dispositif de communication (200) en réponse au premier message poll pour demander une ressource additionnelle pour la transmission d'un deuxième message au réseau (150); et
transmettre par le réseau (150) au dispositif de communication (200) en réponse à la réception de la requête de ressource du dispositif de communication (200) un message poll additionnel.

15. Procédé selon la revendication 1 ou 14, où le dispositif de communication (200) et le réseau (150) font partie d'un système de communication sans fil.
